(19) Europäisches Patentamt
European Patent Office
Office européen des brevets

(11) Numéro de publication: **0 273 843 B1**

(12) **FASCICULE DE BREVET EUROPEEN**

(45) Date de publication de fascicule du brevet:
09.10.91

(51) Int. Cl.⁵: **A23B 4/02**

(21) Numéro de dépôt: 87460003.4

(22) Date de dépôt: 03.03.87

(54) **Procédé de saumurage et de salage de viandes notamment de jambons.**

(30) Priorité: 02.12.86 FR 8616961

(43) Date de publication de la demande:
06.07.88 Bulletin 88/27

(45) Mention de la délivrance du brevet:
09.10.91 Bulletin 91/41

(84) Etats contractants désignés:
AT BE CH DE ES GB GR IT LI LU NL SE

(56) Documents cités:
WO-A-82/00081
DE-A- 2 818 862
GB-A- 2 085 742

(73) Titulaire: **Dreano, Claude**
**Route de Perhan**
**F-56490 Guillers(FR)**

(72) Inventeur: **Dreano, Claude**
**Route de Perhan**
**F-56490 Guillers(FR)**

(74) Mandataire: **Le Guen, Louis François**
**CABINET Louis LE GUEN 38, rue Levavasseur**
**B.P. 91**
**F-35802 Dinard Cédex(FR)**

## Description

La présente invention concerne un procédé de saumurage et de salage de viandes en morceaux et notamment de morceaux de viande de porc tels que des jambons.

Dans le brevet français FR-A-2 394 250 déposé le 27 avril 1977 par la présente demanderesse, il est décrit un procédé de saumurage dans lequel les morceaux de viande à saumurer sont placés dans une enceinte pouvant tourner autour d'un axe horizontal et qui comprend les opérations suivantes:

- mise en rotation de l'enceinte,
- mise sous vide de l'enceinte,
- addition dans ladite enceinte de la quantité de saumure correspondant à la masse des morceaux de viande à saumurer,
- mise sous pression de l'enceinte avec un gaz inerte ou neutre, et, après un temps prédéterminé,
- rétablissement de la pression normale dans l'enceinte avec arrêt de la rotation, avant l'ouverture de l'enceinte.

Il est également décrit un procédé de salage à sec dans lequel, au lieu d'ajouter de la saumure liquide après la mise sous vide de l'enceinte, on ajoute directement le sel.

En pratique, le cycle d'abaissement et de remontée de pression est répété plusieurs fois et le gaz inerte utilisé est de l'azote.

Par rapport aux procédés existants, ces procédés de saumurage et de salage à sec se sont révélés très satisfaisants et présentent un certain nombre d'avantages importants: gain de temps énorme, aucune perte de saumure, rétention améliorée de la saumure par les produits, moins de perte de poids à la cuisson, bonne qualité des produits obtenus, etc.

Cependant, un problème de coloration demeurait, les produits saumurés ou salés selon le procédé présentant une couleur un peu trop pâle.

Un objet de la présente invention consiste donc à modifier ledit procédé afin d'obtenir une couleur de produit satisfaisante.

Cet objet est atteint en utilisant un mélange gazeux renfermant de l'oxygène, notamment de l'air de préférence stérile, pour établir la pression dans l'enceinte.

Jusqu'alors, on avait employé un gaz inerte, en pratique de l'azote, pour établir la pression dans l'enceinte car on craignait qu'un mélange gazeux contenant de l'oxygène, comme de l'air comprimé, n'oxydât les gras. Ceux-ci auraient été rancis et jaunis, ce qui était contraire au résultat recherché.

Malgré cela, vu le problème de coloration rencontré avec l'azote, des essais furent effectués avec de l'air comprimé stérile.

De manière surprenante, les gras ne furent pas altérés et conservèrent leur couleur blanche. Par contre, le reste de la viande prit une coloration rouge beaucoup plus soutenue qu'avec l'azote.

A postériori, on a expliqué ce résultat par le fait que le procédé est mis en oeuvre à basse température, celle-ci étant de l'ordre de 4° C, et qu'alors, l'oxygène de l'air ne produit pas un effet oxydant sur la viande.

Les améliorations et plus généralement les objets de l'invention sont atteints par la mise en oeuvre des procédés définis dans les revendications 1 et 2 jointes aux présentes. Des mesures préférentielles sont indiquées dans les revendications dépendantes 3 à 6.

On a cherché également à améliorer le procédé de saumurage en modulant le barattage en fonction des phases sous vide et sous pression. De bons résultats ont été obtenus en faisant tourner l'enceinte en continu lors des phases sous vide et en la faisant tourner par intermittence lors des phases sous pression. Dans un essai particulièrement satisfaisant, l'enceinte tournait à raison de 6 tours/min lors des phases sous vide et chaque mise en rotation comprenait seulement 2 ou 3 tours lors des phases sous pression. Les jambons ainsi traités étaient moins agressés pendant les phases sous pression et donc mieux préservés en surface.

Dans le brevet FR-A-2 394 250, notamment comme l'indique la Fig. 2, le saumurage se termine par une phase de barattage à la pression atmosphérique, consécutive à une phase sous pression.

Des essais ont prouvé qu'il était préférable de terminer par une phase assez longue de barattage sous vide, l'absorption et la rétention de saumure par les jambons étant encore augmentées. Dans un essai particulièrement satisfaisant, la dernière phase de barattage sous vide durait au moins 2 heures.

Les mêmes résultats ont été obtenus en utilisant le procédé de l'invention pour le salage à sec.

Il est à noter également que le procédé selon l'invention s'applique de façon satisfaisante à des viandes qui ont déjà été saumurées selon un procédé classique tel que le saumurage à l'aiguille. Il permet alors d'injecter un supplément de saumure dans la viande pour affiner le dosage et, surtout, de réduire les pertes de poids à la cuisson.

## Revendications

1. Procédé de saumurage dans lequel les morceaux de viande à saumurer sont placés dans une enceinte d'un volume nettement supérieur au volume des morceaux de viande introduits et pouvant tourner autour d'un axe horizontal, dans lequel, une fois lesdits morceaux introduits dans l'enceinte, on met cette dernière en rotation avec ou non changement de sens, on pratique le vide, on additionne dans ladite enceinte la quantité de saumure liquide juste nécessaire à la masse des morceaux de viande à saumurer, ou très légèrement en excès de manière qu'en cours de rotation les morceaux de viande soient tantôt hors de la saumure, tantôt dedans, on met sous pression l'enceinte et, après un temps prédéterminé, on rétablit la pression dans l'enceinte avant l'ouverture de celle-ci, le cycle de diminution et d'augmentation de pression pouvant être répété plusieurs fois, caractérisé en ce qu'on emploie un mélange gazeux contenant de l'oxygène pour augmenter la pression, notamment de l'air, et que le procédé est mis en oeuvre à basse température, de l'ordre de 4° C.

2. Procédé de saumurage à sec selon la revendication 1, caractérisé en ce qu'au lieu d'ajouter de la saumure liquide après la mise sous vide de l'enceinte, on procède à l'addition directe d'une quantité de sel sec juste nécessaire à la masse des morceaux de viande à saumure, avant la mise en rotation de l'enceinte.

3. Procédé de saumurage selon la revendication 1 ou 2, caractérisé en ce qu'on l'applique à de la viande pré-saumurée.

4. Procédé de saumurage selon la revendication 1 ou 2, caractérisé en ce que ladite enceinte tourne en continu pendant les phases de diminution de pression et de façon intermittente lors des phases d'augmentation de pression.

5. Procédé de saumurage selon l'une des revendications 1 à 3, caractérisé en ce que la dernière phase avant le rétablissement de la pression atmosphérique dans l'enceinte et la sortie des morceaux de viande est une phase sous vide prolongée pendant laquelle l'enceinte tourne en continu ou pendant des périodes relativement longues.

6. Procédé de saumurage selon la revendication 4, caractérisé en ce que la dernière phase sous vide dure au moins 2 heures.

## Claims

1. Method of brining in which the pieces of meat to be brined are placed in an enclosure with a volume which is much larger than the volume of the pieces of meat introduced and which is capable of rotating about a horizontal axis, in which, once the said pieces have been introduced into the enclosure, the latter is caused to rotate with or without a change of direction, a vacuum is applied, the quantity of liquid brine just sufficient for the weight of the pieces of meat to be brined is added, or very slightly in excess of this quanity, so that during rotation the pieces of meat are at one time outside the brine, at other times in it, the enclosure is pressurised and, after a predetermined time, the pressure in the enclosure is restored before it is opened, it being possible to repeat the pressure reduction and increase cycle several times, characterised in that a gaseous mixture is used containing oxygen to increase the pressure, particularly of the air, and in that the method is applied at low temperature, of the order of 40PToPTC.

2. Dry brining method according to claim 1, characterised in that instead of adding the liquid brine after applying a vacuum to the enclosure, a quantity of dry salt just sufficient for the weight of the pieces of meat to be brined is added directly before the enclosure is set in rotation.

3. Brining method according to claim 1 or 2, characterised in that it is applied to the prebrined meat.

4. Brining method according to claim 1 or 2, characterised in that the said enclosure rotates continuously during the pressure reduction phases, and intermittently during the pressure increase phases.

5. Brining method according to one of claims 1 to 3, characterised in that the last phase before the restoration of the atmospheric pressure in the enclosure and the departure of the pieces of meat is a prolonged vacuum phase during which the enclosure rotates continuously or for relatively long periods.

6. Brining method according to claim 4, characterised in that the last vacuum phase lasts at least 2 hours.

## Patentansprüche

1. Pökelverfahren, bei dem die zu pökelnden Fleischstücke in einen Behälter gelegt werden, dessen räumliche Ausmaße sehr viel größer sind als die räumlichen Ausmaße des eingetragenen Fleisches, und welcher in der Lage ist, über die horizontale Achse zu rotieren, bei welchem, sobald die besagten Stücke in den Behälter eingetragen worden sind, Letzterer veranlaßt wird, mit oder ohne Richtungswechsel zu rotieren, ein Vakuum angelegt wird, die Pökelflüssigkeit in einer Menge, die gerade ausreicht für das Gewicht der zu pökelnden Fleischstücke, oder in einem sehr leichten Überschuß dieser Menge zugegeben wird, so daß während der Rotation sich die Fleischstücke zu einer Zeit außerhalb der Pökel und zu anderer Zeit in ihr sind, der Behälter unter Druck gesetzt wird und nach einer vorbestimmten Zeit der Druck in dem Behälter vor dem Öffnen ausgeglichen wird, wobei es möglich ist, die Druckreduktions- und -zunahme-Zyklen mehrere Male zu wiederholen, dadurch gekennzeichnet, daß eine Gasmischung, die Sauerstoff enthält, insbesondere Luft zur Druckzunahme benutzt wird, und daß das Verfahren bei niedrigen Temperaturen in der Größenordnung von 4° C angewendet wird.

2. Trockenpökelverfahren nach Anspruch 1, dadurch gekennzeichnet, daß anstelle der Zugabe der Pökelflüssigkeit nach Anlegen des Vakuums an den Behälter trockenes Salz in einer Menge, die gerade für das Gewicht der zu pökelnden Fleischstücke ausreicht, zugegeben wird, direkt bevor der Behälter in Rotation versetzt wird.

3. Pökelverfahren nach Anspruch 1 oder 2, dadurch gekennzeichnet, daß es auf vorgepökeltes Fleisch angewendet wird.

4. Pökelverfahren nach Anspruch 1 oder 2, dadurch gekennzeichnet, daß besagter Behälter während der Druckreduktionsphasen kontinuierlich und während der Druckzunahmephasen intermittierend rotiert.

5. Pökelverfahren nach einem der Ansprüche 1 bis 3, dadurch gekennzeichnet, daß die letzte Phase vor der Wiederherstellung des Atmosphärendrucks in dem Behälter und der Entnahme der Fleischstücke eine verlängerte Vakuumphase ist, während welcher der Behälter kontinuierlich oder für relativ lange Perioden rotiert.

6. Pökelverfahren nach Anspruch 4, dadurch gekennzeichnet, daß die letzte Vakuumphase mindestens zwei Stunden dauert.